# EUROPEAN PATENT SPECIFICATION

(11) **EP 0 780 264 B1**
(45) Date of publication and mention of the grant of the patent: **04.10.2001**
(21) Application number: 96106266.8
(22) Date of filing: 22.04.1996
(51) Int. Cl.: B60P 3/08

(54) **A vehicle with two superposed decks for transporting motor vehicles**
Fahrzeug mit zwei übereinanderliegenden Bodenteilen zum Transport von Fahrzeugen
Véhicule avec deux ponts superposés pour le transport de véhicules automobiles

(30) Priority: 20.12.1995 IT TO951031
(43) Date of publication of application: 25.06.1997
(73) Proprietor: ROLFO S.p.A., I-12042 Bra (Cuneo) (IT)
(72) Inventor: Rolfo, Giorgio, 12042 BRA (Cuneo) (IT)
(74) Representative: Fioravanti, Corrado

(56) References cited:
- EP-A- 0 241 711
- EP-A- 0 418 178
- FR-A- 1 373 916
- US-A- 4 081 196

## Description

The present invention relates to a vehicle with two superposed decks for transporting motor vehicles, according to the preamble of Claim 1.

In a truck with two superposed decks for transporting motor vehicles, known from the document EP-A-0 241 711, the tiltable platform has a slidable front extension which is used as a bridge for a motor car to cross from the top deck to a fixed load deck or superstructure disposed above the driver's cab.

When the slidable extension is retracted, the tiltable platform can be pivoted about its transverse tilt axis, lowering its rear portion and raising its upper portion to allow a motor vehicle loaded onto the platform to be disposed partially above a motor vehicle loaded onto the superstructure.

With the solution according to the document EP-A-0 241 711, in order to achieve this configuration, in the case of medium-size category motor cars, it is necessary to lift the entire upper deck temporarily to a height greater than that of the superstructure and greater than that permitted by the regulations and corresponding to the normal movement of the vehicle, making use, for this purpose of the teachings of the document FR-A-1 373 916.

A tiltable platform of the aforesaid type with a slidable front extension is also known from the document US-A-4 081 196.

The main object of the invention is to provide a vehicle with two superposed decks of the type mentioned at the beginning which has at least one tiltable platform of the aforementioned type, which is more versatile in use than the solutions according to the documents EP-A-0 241 711 and US-A-4 081 196 and which, amongst other things, does not require the upper load deck to be lifted temporarily above the height of the superstructure and the normal height for movement of the vehicle in order to achieve the partial superposition of the motor vehicles described above, even when medium-category motor cars are loaded.

According to the invention this object is achieved by means of a vehicle as claimed.

The invention was devised for application to a truck for transporting motor cars but it is equally applicable to vehicles of other types such as a road trailer, a road semitrailer or a railway truck.

Moreover, the invention is applicable to the upper decks of vehicles having several consecutive tiltable platforms, one or more of which may be slidable forwardly and rearwardly as a single piece according to the invention.

In addition to being able to be inclined by the raising of its front portion and the lowering of its rear portion as stated above, a slidable platform according to the invention is also suitable for being inclined in the opposite sense to satisfy particular loading requirements, for example, for the transportation of two monospace motor vehicles.

The characteristics and advantages of the invention will become clearer from a reading of the following detailed description provided with reference to the appended drawings, given by way of non-limiting example, in which:
Figure 1 is a partially-sectioned schematic side elevational view of a truck with two superposed decks for transporting motor vehicles according to the invention,
Figure 2 is a partial plan view of the upper deck of the truck,
Figure 3 is a transverse section taken as indicated III-III in Figure 2 and on an enlarged scale,
Figure 4 is a partial side view taken on the arrow IV of Figure 2, on an enlarged scale,
Figure 5 is a partial plan view of a detail taken on the arrow V of Figure 4,
Figures 6 and 7 are partial side views of a variant relating to a system for controlling the inclination of the tiltable platform shown in Figure 1, and
Figures 8 to 15 are side elevational views showing some possible ways of loading motor vehicles on the upper deck of the truck.

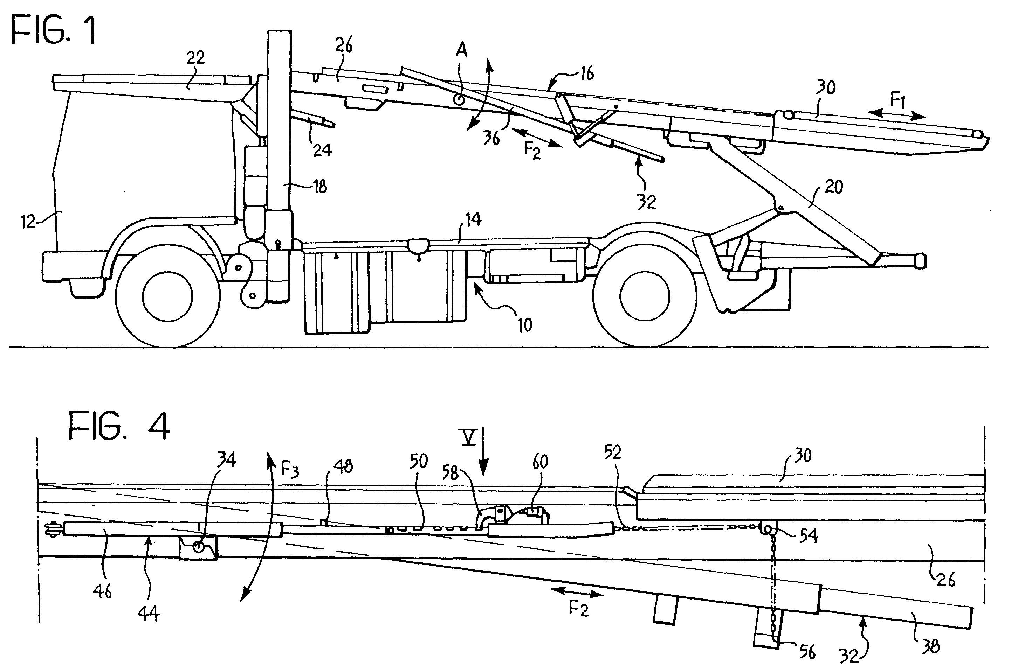

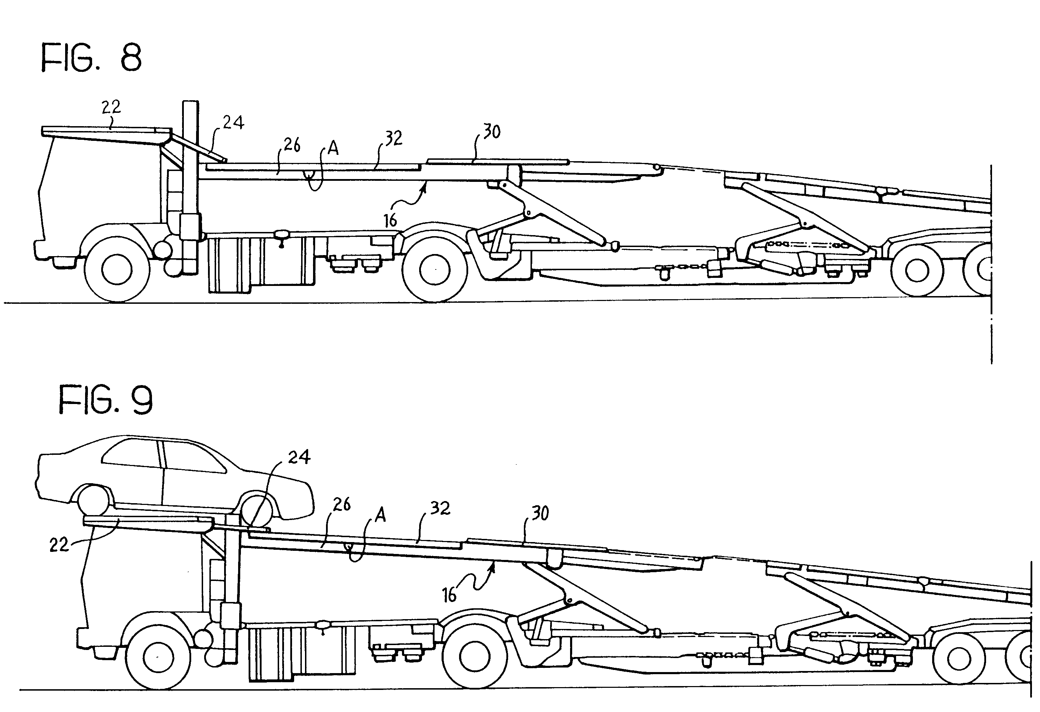

Figure 1 shows a motor-car transporter truck which can tow a trailer which may also be suitable for transporting motor cars or other motor vehicles, such as that shown in Figures 8 to 14.

The truck of Figure 1 comprises a chassis 10 with a driver's cab 12.

The chassis 10 has a load superstructure which includes, amongst other things, a lower load deck 14 and an upper load deck 16.

The upper load deck 16 is supported on the chassis 10 by means of a pair of front uprights 18 and a pair of rear struts 20.

The uprights 18 may include a male and female screw system for raising and lowering the front portion of the upper deck 16.

The rear struts 20 serve for raising and lowering the upper deck 16 and are preferably of the compass type described in the document EP-A-0 024 265 to which reference should be made.

The truck also includes a fixed load deck or superstructure 22 which is disposed above the driver's cab 12 and is supported by the front uprights 18.

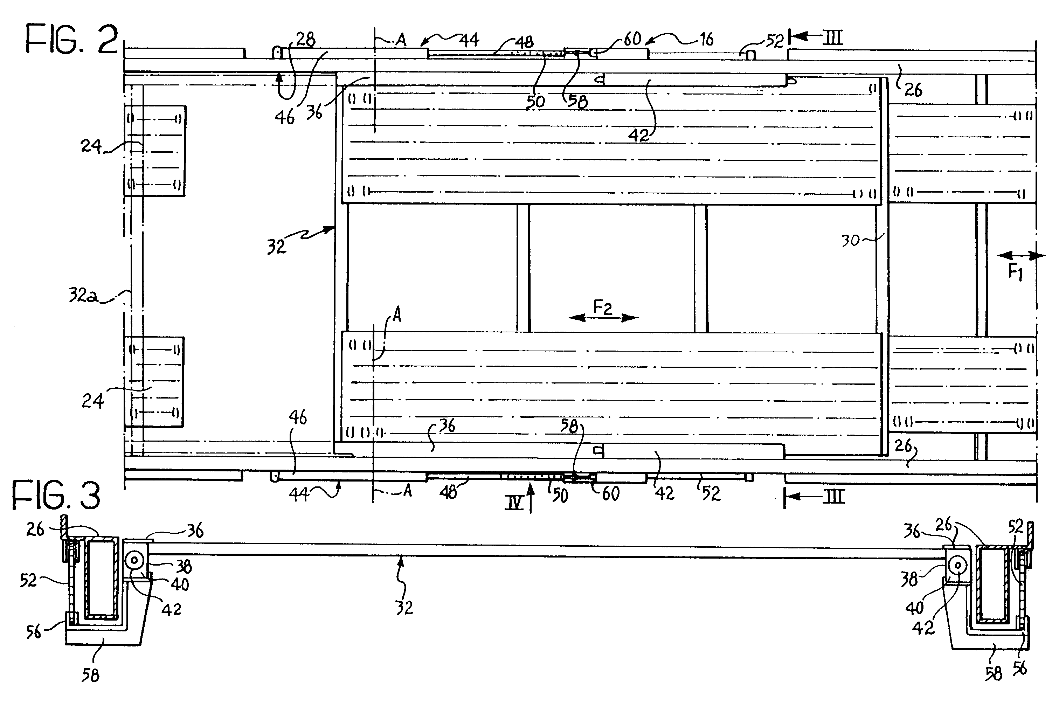

With reference to Figures 1 and 2, the rear portion of the superstructure 22 has a pair of tiltable rear ramps 24 of well-known type which will be referred to further below.

The upper deck 16 comprises a pair of side members 26 supported by the uprights 18 and the struts 20.

The side members 26 define an intermediate space 28 which extends essentially from the front uprights 18 to the rear struts 20.

The intermediate space 28 is defined at the rear by a tail platform which may be tiltable in known manner.

This platform, which will not be described in detail, carries a floor 30 which is slidable forwardly and rearwardly between the side members 26, in accordance with the double arrow F₁. One of the functions of the floor 30 will be described below.

A tiltable platform 32 according to the invention is disposed in the intermediate space 28, between the side members 26, and is supported in the manner which will now be described.

With reference to Figures 3 and 4 as well as Figures 1 and 2, the side members 26 support a pair of pins 34 which in turn support a pair of guides 36.

The pins 34 define a tilt axis A for the platform 32. The axis A is transverse the direction of movement of the vehicle.

Each tilting guide 36 preferably comprises, as shown in Figure 3, a strong metal channel-section opening sideways and inwardly relative to the upper deck 16, that is, towards the intermediate space 28.

The lateral edges of the tiltable platform 32 in turn preferably comprise, as shown in Figure 3, strong metal channel-sections 38 opening outwardly relative to the upper deck 16, that is, towards the side members 26.

The edges 38 are fitted slidingly in the respective guides 36 so as to define a longitudinal cavity 40 between each pair of sections 36 and 38.

A linear fluid actuator 42 such as a double-acting hydraulic or pneumatic jack is provided in each of the cavities 40.

One end of each actuator 42 is connected to the respective guide 36 and its other end is connected to the corresponding edge 38 of the tiltable platform 32.

Means, operable from the ground are associated with the two actuators 42 for the simultaneous control of their contraction and extension movements.

The tiltable platform 32 can be slid forwardly and rearwardly as a single piece, in its plane, in accordance with the double arrow F₂ of Figures 1, 2 and 4, by means of the actuators 42.

In Figure 2, the platform 32 is shown in a fully retracted position in which its rear edge is adjacent the front edge of the floor 30 which in turn is in a fully advanced position.

In Figure 2, the position of the front edge of the platform 32 when it is in a fully advanced position is shown in chain line at 32a. As will be noted, in this advanced position, the front edge of the platform 32 interferes with the ramps 24 for the purpose which will be explained below.

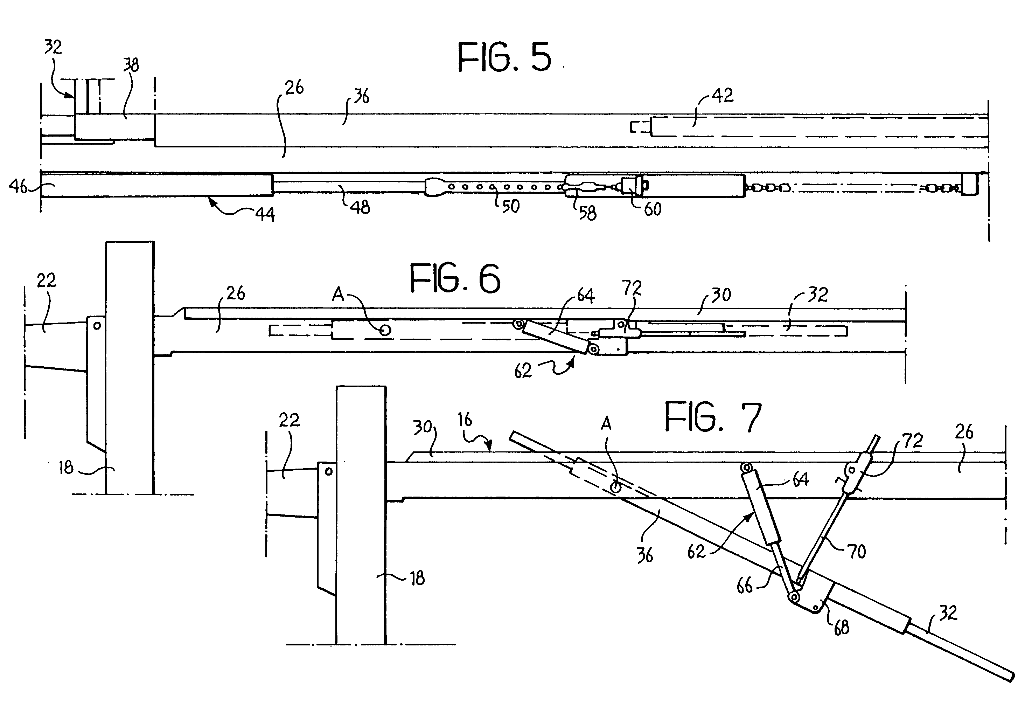

Figures 2, 3, 4 and 5 show one embodiment of a system for bringing about the tilting of the guides 36 and of the entire platform 32 about the transverse axis A in accordance with the double arrow F₃ of Figures 1 and 4.

According to this embodiment, each side member 26 and its tilting guide 36 are interconnected by a hydraulic or pneumatic fluid actuator 44 also associated with control means operable from the ground.

The two actuators 44 are in the form of double-acting jacks each having a cylinder 46 and a rod 48.

The opposite end of the cylinder 46 to the rod is connected to the respective side member 26.

The outer end of the rod 48 is extended by a rack element 50 which has a series of holes or notches.

A flexible element 52, such as a chain, in turn extends from the rack element 50.

The flexible element 52 extends around an idler member 54 such as a pulley connected to the side member 26.

The opposite end of the flexible element 52 to that which is connected to the rack element 50 is fixed to an attachment point 56 on a bracket 58 fixed to the respective guide 36.

The idler member 54 is at a point disposed substantially above the attachment point 56.

The arrangement is such that a predominant part of the weight of the tiltable platform 32 is always behind the tilt axis A.

As will be understood, the simultaneous operation of the two actuators 44 in the direction of an extension thereof brings about, with the aid of the weight of the platform 32, the lowering of its rear portion and the raising of its front portion about the axis A.

The simultaneous operation of the actuators 44 in the direction of a contraction thereof brings about the reverse movement until the platform 32 is returned to the general plane of the upper deck 16.

To enable the platform 32 to be locked firmly in the attitude in which it is coplanar with the upper deck 16 and in several inclined attitudes, a pawl 58 associated with the rack element 50 is mounted for pivoting on each side member 26 and has a tip which can be engaged selectively in the notches or holes 50.

Each pawl 58 preferably have respective fluid actuators 60, as shown, for the simultaneous control of their movements. These actuators 60 are also operable from the ground.

Figures 6 and 7 show another embodiment of a system for bringing about the tilting of the platform 32, which also appears in Figure 1.

In Figure 6, the platform 32 and its guides, again indicated 36, are coplanar with the upper deck 16 and in Figure 7 they are inclined.

As can be seen, each side member 26 and the respective tilting guide 36 are interconnected at respective points remote from the tilt axis A by a fluid actuator 62 with a cylinder 64 connected to the side member 26 and a rod 66 connected to the guide 36 by means of a bracket 68.

The simultaneous operation of the two actuators 62 in the direction of an extension thereof lowers the platform 32 from the attitude of Figure 6 to that of Figure 7 and the simultaneous contraction of the two actuators 62 returns the platform 32 to the position in which it is coplanar with the upper deck 16.

The embodiment of Figures 6 and 7 also has a device for supporting the platform 32 in several angular positions. This device comprises a pair of rods 70 each articulated to a respective guide 36 and a pair of sleeves 72 each articulated to a corresponding side member 26, the respective rod 70 being slidable therein.

In known manner, the rod 70 has a series of through holes and the sleeve 72 in turn has a through hole with which the holes of the rod 70 can coincide.

A pin 74 can be inserted selectively in the holes of the rod 70 and of the sleeve 72 in order to lock the platform 32 securely in the desired angular attitude.

Reference will now be made to Figures 8 to 14 to describe a possible loading sequence for a first motor car 1 and for a second motor car 2, both of medium-size category, onto the superstructure 22 and onto the upper deck 16 of the truck.

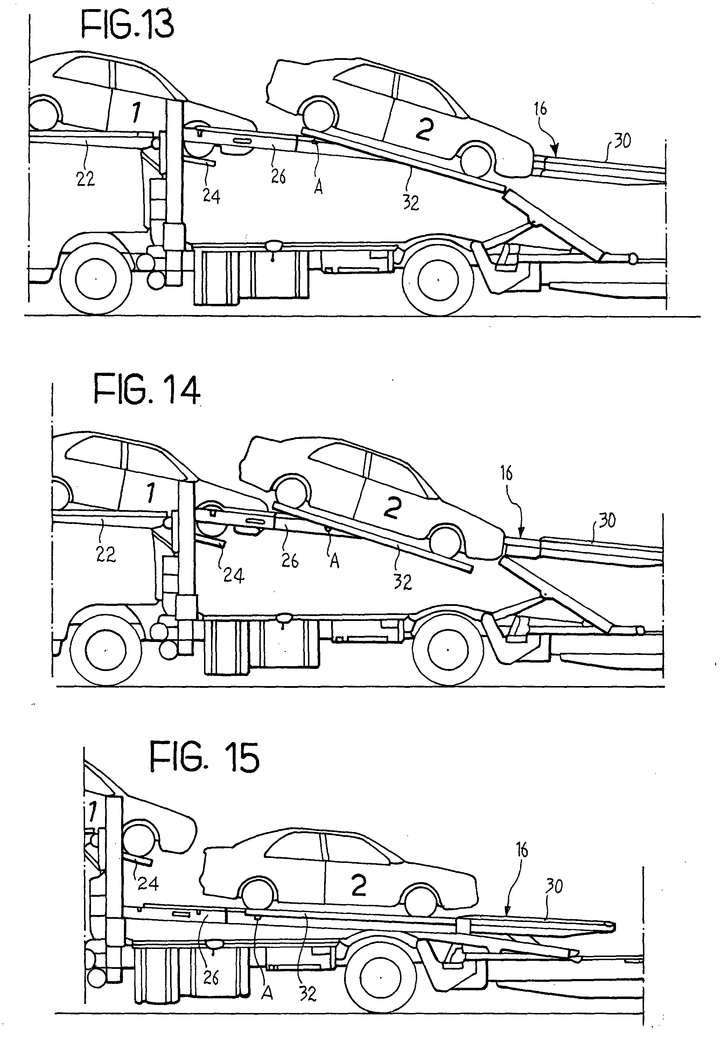

In these Figures 8 to 14, as in Figure 15, the guides 36 of the tiltable platform 32 have been omitted for clarity.

In Figure 8, the upper deck 16 has been brought to an intermediate height and its rear end is connected to the front end of the upper deck of a trailer coupled to the truck.

The rear end of the upper deck of the trailer is lowered substantially to the ground, in known manner not shown, to allow a car to mount it and to travel along the two decks.

The tiltable platform 32 is coplanar with the deck 16 and is in a fully advanced position in which its front end is beneath the ramps 34 of the superstructure 22.

The sliding floor 30 is also in a fully advanced position to constitute a bridge between the rear portion of the deck 16 and the platform 32.

In Figure 9, with the platform 32 and the floor 30 in the same positions as in Figure 8 relative to the deck 16, the front end of the deck 16 has been raised so as to raise the ramps 24 under the thrust of the front end of the platform 32.

This has enabled the motor car 1 to be transported along the upper decks of the trailer and of the truck until it is arranged on the superstructure 22 with the front wheels resting on the raised ramps 24.

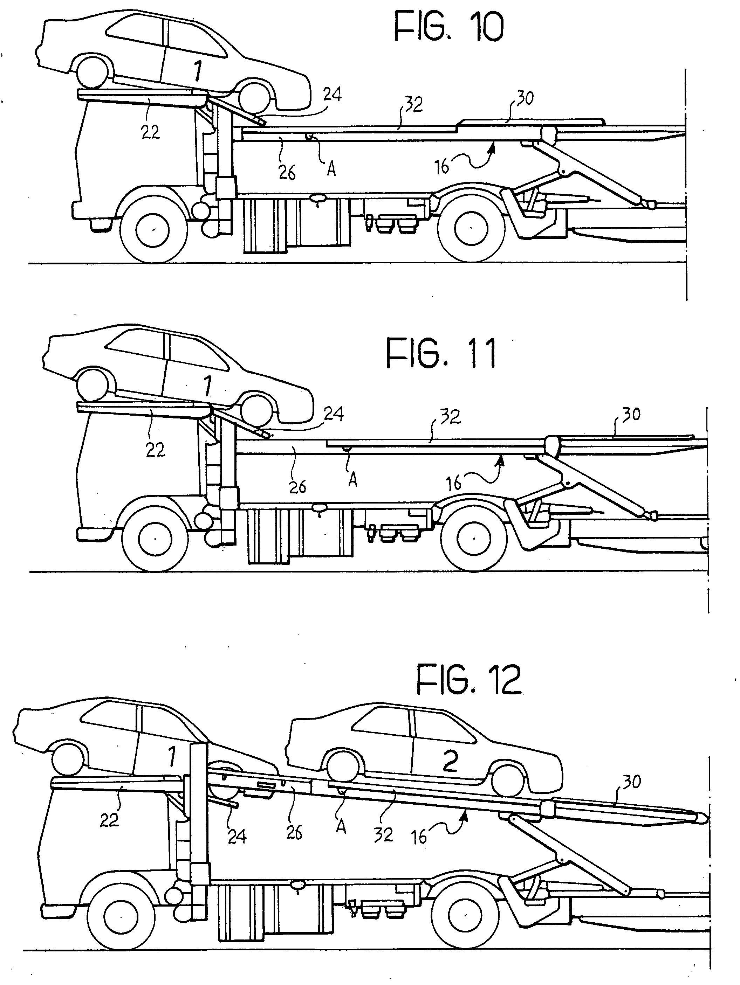

In Figure 10, the upper deck 16 has been lowered to the intermediate position with the tiltable platform 32 and the sliding floor 30 still in the positions of Figures 8 and 9 relative to the deck.

The ramps 24 have followed the lower end of the platform 32 in its descent and the nose of the car 1 has been lowered as shown.

In Figure 11, both the platform 32, which is still coplanar with the upper deck 16, and the sliding floor 30 have been slid fully rearwardly.

The front end of the platform 32 has left the ramps 24 with the car 1 in the same attitude as in Figure 10 and this front end has been moved away from the position beneath the nose of the car 1.

In Figure 12, the platform 32 and the floor 30 are still in the same positions as in Figure 11 relative to the deck 16 and the front end of the deck 16 has been raised to the height for movement of the truck whilst the nose of the car 1 has remained lowered in the space between the side members 26 left free by the platform 32 which has been withdrawn.

The car 2 has been moved from the upper deck of the trailer until it is arranged completely on the platform 32.

At this point, the rear wheels of the car 2 are restrained on the platform 32 by means of a suitable harness, blocks, or the like to ensure its immobility.

In Figure 13, the sliding floor 30 has been fully withdrawn and the tiltable platform 32 has been inclined to a suitable extent, the car 2 being inclined at the same time, its nose descending into the space between the side members 26 left free by the floor 30.

In Figure 14, the platform 32, which is still inclined as in Figure 13, has been moved back, together with the car 2, which is thus in its final attitude in which its tail is disposed above the nose of the car 1.

As can be seen from the drawings, in order to reach this condition, the front end of the upper deck 16 has always remained at the height corresponding to the movement of the truck.

The loading of the truck and of the trailer are then completed in known manner.

Figure 15 shows another loading possibility offered by the tiltable platform 32 according to the invention.

In Figure 15, the car 1 has already been loaded as described above. The deck 16 has then been lowered completely and the tiltable platform 32 and the sliding floor 30 have both been brought to the most retracted positions.

Starting from the trailer, the car 2 has been moved onto the platform 32 which is still coplanar with the deck 16 after the latter has been raised to the position of Figure 12 and the loading sequence of the car 2 then continues as in Figures 13 and 14.

This type of loading of the car 2 enables it to be restrained on the platform 32 whilst it is close to the ground, thus avoiding the risk of accident involved by this restraint operation if it is carried out with the upper deck raised as in Figure 12.

## Claims

1. A vehicle with two superposed decks for transporting motor vehicles, comprising a lower deck (14) and an upper deck (16), in which the upper deck (16) includes at least one intermediate platform (32) tiltable about an axis (A) transverse the direction of movement of the vehicle between a position coplanar with the upper deck and at least one inclined position in which a portion thereof disposed behind the tilt axis (A) is lowered and a portion thereof disposed in front of the tilt axis (A) is raised relative to the upper deck to allow a motor vehicle loaded onto the tiltable platform (32) to be disposed partially above a motor vehicle loaded onto a forward portion (22) of the upper deck disposed in front of the tiltable platform (32) and to allow a motor vehicle loaded onto a rear portion (30) of the upper deckdisposed behind the tiltable platform (32) to be arranged partially above the motor vehicle loaded onto the tiltable platform (32),
**characterized in that** the tiltable platform (32) is slidable forwardly and rearwardly, as a single piece, in its plane, and is adjustable along its axis of sliding at least to a fully advanced position in which a front edge of the platform (32) is adjacent to a rear edge of the forward portion (22) of the deck, and to a fully retracted position in which a rear edge of the platform (32) is adjacent to a front edge of the rear portion (30) of the deck, and **in that** actuator means (42) are provided to bring about the sliding of the platform (32) between the said fully advanced and fully retracted positions.

2. A vehicle according to Claim 1, **characterised in that** the upper deck (16) comprises a pair of side members (26) on which guides (36) tiltable about the aforesaid transverse axis (A) are articulated and slidingly support respective lateral edges (38) of the tiltable platform (32).

3. A vehicle according to Claim 2, **characterized in that** each tiltable guide (36) comprises a channel-section opening sideways and inwardly relative to the upper deck (16), and the respective edge (38) of the platform (32) comprises a channel-section opening sideways and outwardly relative to the upper deck (16) and fitted slidingly in the guide (36) so as to define a longitudinal cavity (40) between the two sections, and **in that**, in each of these cavities (40), there is a linear fluid actuator (42) for bringing about the sliding, one end of the actuator (42) being connected to the guide (36) and its other end being connected to the corresponding edge (38) of the tiltable platform (32), means being provided for the simultaneous control of the contraction and extension movements of the actuators (42).

4. A vehicle according to Claim 2 or Claim 3, **characterized in that** each side member (26) and the respective tiltable guide (36) are interconnected at respective points remote from the tilt axis (A) by a fluid actuator (62) for bringing about the tilting, the actuator being articulated at one end to the side member (26) and at the other end to the guide (36), means being provided for the simultaneous control of the contraction and extension movements of the actuators (62).

5. A vehicle according to Claim 4, **characterized in that** each side member (26) and the respective tiltable guide (36) are interconnected by a device for restraining the tiltable platform (32) in several angular positions, the device comprising a rod (70) with a series of through holes, a sleeve (72) in which the rod (70) is slidable and which has a through hole with which the holes in the rod can coincide, and a pin (74) which can be inserted selectively in the holes of the rod (70) and of the sleeve (72), and **in that** one end of the rod (70) is articulated to the guide (36) and the sleeve (72) is articulated to the side member (26), or vice versa.

6. A vehicle according to Claim 2 or Claim 3, **characterized in that** the guides (36) are articulated on a transverse axis (A) arranged so that a predominant part of the weight of the tiltable platform (32) is behind the axis (A), **in that** a linear fluid actuator (44) provided along each side member (26) for bringing about the tilting has one of its ends connected to the side member (26) and its other end connected to an end of a flexible element (52) such as a chain, **in that** the other end of the flexible element (52) is connected to the respective guide (36) at a point behind the transverse tilting axis (A) , and **in that** the flexible element (52) extends, between its ends, around an idler member (54) connected to the side member (26) at a point disposed substantially above the connection point between the flexible element (52) and the guide (36), means being provided for the simultaneous control of the actuators (44).

7. A vehicle according to Claim 5, **characterized in that** the fluid actuator (44) for bringing about the tilting comprises a cylinder (46) connected to the side member (26) and a rod (48) connected to the flexible element (52) by means of a rack element (50) which has a series of holes or notches, and **in that** a pawl (58) mounted on the side member (26) can be engaged selectively in the holes or notches of the rack element (50).

8. A vehicle according to Claim 7, **characterized in that** the pawl (58) has a fluid actuator (60) for bringing about its engagement and disengagement movements relative to the holes or notches.

9. A vehicle according to any one of Claims 2 to 8, **characterized in that** it comprises a floor (30) mounted for sliding forwardly and rearwardly between the side members (26) in a position behind the tiltable platform (32) in order to constitute a bridge over a space left free by the tiltable platform (32) when it is in the advanced position and coplanar with the upper deck (16).

## Patentansprüche

1. Fahrzeug mit zwei übereinander liegenden Decks für den Transport von Kraftfahrzeugen, wobei das Fahrzeug ein unteres Deck (14) und ein oberes Deck (16) enthält, wobei das obere Deck (16) zumindest eine Zwischenplattform (32) aufweist, die um eine Achse (A), die quer zur Fahrtrichtung des Fahrzeugs liegt, zwischen einer Stellung, in der sie in einer Ebene mit dem oberen Deck liegt, und zumindest einer geneigten Stellung gekippt werden kann, in der ein Teil der Plattform, der hinter der Kippachse (A) liegt, abgesenkt und ein Teil der Plattform, der vor der Kippachse (A) liegt, relativ zum oberen Deck angehoben wird, um ein Kraftfahrzeug, das auf die kippbare Plattform (32) geladen wurde, teilweise über einem Kraftfahrzeug anzuordnen, das auf einen vorderen Teil (22) des oberen Decks geladen wurde, der vor der kippbaren Plattform (32) liegt, und ein Kraftfahrzeug, das auf einen hinteren Teil (30) des oberen Decks geladen ist, der hinter der kippbaren Plattform (32) liegt, teilweise über dem Kraftfahrzeug anzuordnen, das auf die kippbare Plattform (32) geladen wurde,
**dadurch gekennzeichnet, dass** die kippbare Plattform (32) in einem Stück in ihrer Ebene nach vorne und hinten verschoben werden kann und entlang der Verschiebeachse zumindest in einer vollständig vorgeschobenen Stellung, in der eine vordere Kante der Plattform (32) neben einer hinteren Kante des vorderen Teils (22) des Decks liegt, und einer vollständig zurückgezogenen Stellung einstellbar ist, in der eine hintere Kante der Plattform (32) neben einer vorderen Kante des hinteren Teils (30) des Decks liegt, und **dass** ein Stellglied (42) vorgesehen ist, um das Verschieben der Plattform (32) zwischen der vollständig ausgefahrenen und der vollständig zurückgezogenen Stellung zu bewirken.

2. Fahrzeug gemäß Anspruch 1, **dadurch gekennzeichnet, dass** das obere Deck (16) ein Paar von Seitenelementen (26) enthält, auf denen Führungen (36), die um die oben erwähnte Querachse (A) gekippt werden können, gelenkig gelagert sind und entsprechende Seitenkanten (38) der kippbaren Plattform (32) verschiebbar tragen.

3. Fahrzeug gemäß Anspruch 2, **dadurch gekennzeichnet, dass** jede kippbare Führung (36) einen Kanalteil besitzt, der sich nach der Seite und nach innen relativ zum oberen Deck (16) öffnet, wobei die entsprechende Kante (38) der Plattform (32) einen Kanalteil besitzt, der sich nach der Seite und nach außen relativ zum oberen Deck (16) öffnet und in der Führung (36) verschiebbar sitzt, um einen länglichen Hohlraum (40) zwischen den beiden Teilen zu bilden, und **dass** sich in jedem dieser Hohlräume (40) ein lineares, fluidbetriebenes Stellglied (42) befindet, um das Verschieben zu bewirken, wobei ein Ende des Stellglieds (42) mit der Führung (36) verbunden ist und sein anderes Ende mit der entsprechenden Kante (38) der kippbaren Plattform (32) verbunden ist, wobei eine Einrichtung vorgesehen ist, um das Einziehen und das Ausfahren der Stellglieder (42) simultan zu steuern.

4. Fahrzeug gemäß Anspruch 2 oder Anspruch 3, **dadurch gekennzeichnet, dass** jedes Seitenelement (26) und die entsprechende kippbare Führung (36) an entsprechenden Stellen, die von der Kippachse (A) entfernt liegen, über ein fluidbetriebenes Stellglied (62) miteinander verbunden sind, um das Kippen zu bewirken, wobei das Stellglied an einem Ende im Seitenelement (26) und am anderen Ende in der Führung (36) gelenkig gelagert ist, wobei eine Einrichtung vorgesehen ist, um das Einziehen und das Ausfahren der Stellglieder (62) simultan zu steuern.

5. Fahrzeug gemäß Anspruch 4, **dadurch gekennzeichnet, dass** jedes Seitenelement (26) und die entsprechende kippbare Führung (36) miteinander über eine Vorrichtung verbunden sind, um die kippbare Plattform (32) in mehreren Winkelstellungen einzuspannen, wobei die Vorrichtung eine Stange (70) mit einer Reihe von Durchgangsöffnungen, eine Buchse (72), in der die Stange (70) verschoben werden kann und die eine Durchgangsöffnung besitzt, die mit den Öffnungen in der Stange ausgerichtet werden kann, sowie einen Zapfen (74) besitzt, der wahlweise in die Öffnungen der Stange (70) und der Buchse (72) eingesetzt werden kann, und **dass** ein Ende der Stange (70) in der Führung (36) gelenkig gelagert ist und die Buchse (72) im Seitenelement (26) gelenkig gelagert ist, oder umgekehrt.

6. Fahrzeug gemäß Anspruch 2 oder Anspruch 3, **dadurch gekennzeichnet, dass** die Führungen (36) in einer Querachse (A) gelenkig gelagert sind, die so angeordnet ist, **dass** ein überwiegender Teil des Gewichts der kippbaren Plattform (32) hinter der Achse (A) liegt, **dass** ein lineares, fluidbetriebenes Stellglied (44), das längs jedes Seitenelements (26) vorgesehen ist, um das Kippen zu bewirken, an einem Ende mit dem Seitenelement (26) verbunden ist und am anderen Ende mit dem Ende eines flexiblen Elements (52), beispielsweise mit einer Kette, verbunden ist, **dass** das andere Ende des flexiblen Elements (52) mit der entsprechenden Führung (36) an einem Punkt hinter der quer verlaufenden Kippachse (A) verbunden ist, und **dass** das flexible Element (52) zwischen seinen Enden um ein Hilfselement (54) verläuft, das mit dem Seitenelement (26) an einer Stelle verbunden ist, die im Wesentlichen über dem Verbindungspunkt zwischen dem flexiblen Element (52) und der Führung (36) liegt, wobei eine Einrichtung vorgesehen ist, um die Stellglieder (44) simultan zu steuern.

7. Fahrzeug gemäß Anspruch 5, **dadurch gekennzeichnet, dass** das fluidbetriebene Stellglied (44), das das Kippen bewirkt, einen Zylinder (46), der mit dem Seitenelement (26) verbunden ist, sowie eine Stange (48) enthält, die mit dem flexiblen Element (52) über ein Zahnstangenelement (50) verbunden ist, das mit einer Reihe von Öffnungen oder Kerben versehen ist, und **dass** eine Klinke (58), die auf dem Seitenelement (26) angebracht ist, wahlweise in die Öffnungen oder Kerben des Zahnstangenelements (50) einrasten kann.

8. Fahrzeug gemäß Anspruch 7, **dadurch gekennzeichnet, dass** die Klinke (58) ein fluidbetriebenes Stellglied (60) besitzt, um dessen Einrasten und Ausrasten relativ zu den Öffnungen oder Kerben zu bewirken.

9. Fahrzeug gemäß irgendeinem der Ansprüche 2 bis 8, **dadurch gekennzeichnet, dass** das Fahrzeug einen Boden (30) enthält, der zwischen den Seitenelementen (26) so befestigt ist, **dass** er hinter der kippbaren Plattform (32) nach vorne und hinten verschoben werden kann, um eine Brücke über einen Zwischenraum zu bilden, den die kippbare Plattform (32) frei lässt, wenn sie sich in der vorgeschobenen Stellung befindet und mit dem Deck (16) in einer Ebene liegt.

## Revendications

1. Véhicule ayant deux ponts superposés afin de transporter des véhicules automobiles, comprenant un pont inférieur (14) et un pont supérieur (16), dans lequel le pont supérieur (16) comprend au moins une plate-forme intermédiaire (32) pouvant être inclinée autour d'un axe (A) transversal à la direction de déplacement du véhicule, entre une position coplanaire au pont supérieur et au moins une position inclinée, dans laquelle une partie de ce dernier, disposée derrière l'axe d'inclinaison (A), est abaissée, et une autre partie de ce dernier disposée devant l'axe d'inclinaison (A) est levée par rapport au pont supérieur afin de permettre à un véhicule automobile, chargé sur la plate-forme inclinable (32), d'être disposé partiellement au-dessus d'un véhicule automobile chargé sur une partie avant (22) du pont supérieur, disposée devant la plate-forme inclinable (32), et afin de permettre à un véhicule automobile, chargé sur une partie arrière (30) du pont supérieur, disposée derrière la plate-forme inclinable (32), d'être disposé partiellement au-dessus du véhicule automobile chargé sur la plate-forme inclinable (32),
**caractérisé en ce que** la plate-forme inclinable (32) peut coulisser vers l'avant et vers l'arrière, d'une seule pièce, dans son plan, et est réglable le long de son axe de coulissement, au moins à une position complètement avancée dans laquelle un bord avant de la plate-forme (32) est adjacent à un bord arrière de la partie avant (22) du pont, et à une position complètement rétractée dans laquelle un bord arrière de la plate-forme (32) est adjacent à un bord avant de la partie arrière (30) du pont, et **en ce que** des moyens d'actionnement (42) sont prévus afin d'effectuer le coulissement de la plate-forme (32) entre lesdites positions complètement avancée et complètement rétractée.

2. Véhicule selon la revendication 1, **caractérisé en ce que** le pont supérieur (16) comprend un couple d'organes latéraux (26) sur lesquels des guides (36), pouvant pivoter autour de l'axe transversal (A) précité, sont articulés et supportent par coulissement des bords latéraux (38) respectifs de la plate-forme inclinable (32).

3. Véhicule selon la revendication 2, **caractérisé en ce que** chaque guide inclinable (36) comprend une section de canal s'ouvrant latéralement et vers l'intérieur par rapport au pont supérieur (16), et le bord (38) respectif de la plate-forme (32) comprend une section de canal, s'ouvrant latéralement et vers l'extérieur par rapport au pont supérieur (16), et montée par coulissement dans le guide (36), de manière à définir une cavité longitudinale (40) entre les deux sections, et **en ce que**, dans chacune de ces cavités (40), il est disposé un organe d'actionnement hydraulique (42) rectiligne servant à effectuer le coulissement, une extrémité de l'organe d'actionnement (42) étant reliée au guide (36) et son autre extrémité étant reliée au bord (38) correspondant de la plate-forme inclinable (32), des moyens étant prévus afin d'assurer la commande simultanée des mouvements de rétraction et d'extension des organes d'actionnement (42).

4. Véhicule selon la revendication 2 ou la revendication 3, **caractérisé en ce que** chaque organe latéral (26) et le guide inclinable (36) respectif sont reliés entre eux au niveau de points respectifs éloignés de l'axe d'inclinaison (A), par un organe d'actionnement hydraulique (62) assurant l'inclinaison, l'organe d'actionnement étant articulé, par une première extrémité, à l'organe latéral (26) et, par l'autre extrémité, au guide (36), des moyens étant prévus afin d'assurer la commande simultanée des mouvements de contraction et d'extension des organes d'actionnement (62).

5. Véhicule selon la revendication 4, **caractérisé en ce que** chaque organe latéral (26) et le guide inclinable (36) respectif sont reliés entre eux par un dispositif retenant la plate-forme inclinable (32) en plusieurs positions angulaires, le dispositif comprenant une tige (70) ayant une série de trous traversants, un manchon (72), dans lequel la tige (70) est coulissante et qui présente un trou traversant avec lequel les trous ménagés dans la tige peuvent coïncider, et une broche (74) qui peut être insérée sélectivement dans les trous de la tige (70) et du manchon (72), et **en ce qu'**une extrémité de la tige (70) est articulée par rapport au guide (36) et le manchon (72) est articulé par rapport à l'organe latéral (26), ou vice versa.

6. Véhicule selon la revendication 2 ou la revendication 3, **caractérisé en ce que** les guides (36) sont articulés sur un axe transversal (A) disposé de manière qu'une partie prédominante du poids de la plate-forme inclinable (32) soit disposée derrière l'axe (A), **en ce qu'**un organe d'actionnement hydraulique rectiligne (44) prévu le long de chaque organe latéral (26) afin d'assurer l'inclinaison présente l'une de ses extrémités reliée à l'organe latéral (26) et son autre extrémité reliée à une extrémité d'un élément flexible (52)', tel qu'une chaîne, et **en ce que** l'autre extrémité de l'élément flexible (52) est reliée au guide (36) respectif en un point se trouvant derrière l'axe d'inclinaison transversal (A), et **en ce que** l'élément flexible (52) s'étend, entre ses extrémités, autour d'un organe à rotation libre (54), relié à l'organe latéral (26) en un point disposé sensiblement au-dessus du point de liaison entre l'élément flexible (52) et le guide (36), des moyens étant prévus pour la commande simultanée des organes d'actionnement (44).

7. Véhicule selon la revendication 5, **caractérisé en ce que** l'organe d'actionnement hydraulique (44) assurant l'inclinaison comprend un cylindre (46) relié à l'organe latéral (26) et une tige (48), reliée à l'élément flexible (52) au moyen d'un élément à crémaillère (50), qui présente une série de trous ou d'entailles, et **en ce qu'**un cliquet (58) monté sur l'organe latéral (26) peut être engagé sélectivement dans les trous ou entailles de l'élément à crémaillère (50).

8. Véhicule selon la revendication 7, **caractérisé en ce que** le cliquet (58) présente un organe d'actionnement hydraulique (60) servant à effectuer ses mouvements d'engagement et de désolidarisation par rapport aux trous ou entailles.

9. Véhicule selon l'une quelconque des revendications 2 à 8, **caractérisé en ce qu'**il comprend un plancher (30), monté de façon à coulisser vers l'avant et vers l'arrière entre les organes latéraux (26), dans une position se trouvant derrière la plate-forme inclinable (32), en vue de constituer un pont sur un espace laissé libre par la plate-forme inclinable (32), lorsqu'il se trouve dans la position avancée et coplanaire au pont supérieur (16).
